# FASCICULE DE BREVET EUROPEEN

(11) **EP 3 395 604 B1**
(45) Date de publication et mention de la délivrance du brevet: **17.06.2020**
(21) Numéro de dépôt: 18168669.2
(22) Date de dépôt: 23.04.2018
(51) Int. Cl.: B60L 5/38, B60L 9/00, B60M 1/36, B60L 5/04, G01C 21/36, G05D 1/02, B60L 53/14, B60L 53/30, B60L 53/36, B60M 1/30

(54) **ENSEMBLE CONSTITUÉ D'UN SYSTÈME D'ALIMENTATION PAR LE SOL ET D'UN VÉHICULE ÉLECTRIQUE**
EINHEIT AUS EINEM STROMZUFÜHRUNGSSYSTEM ÜBER DEN BODEN UND EINEM ELEKTROFAHRZEUG
ASSEMBLY MADE UP OF A GROUND-BASED POWER SUPPLY SYSTEM AND AN ELECTRIC VEHICLE

(30) Priorité: 25.04.2017 FR 1753580
(43) Date de publication de la demande: 31.10.2018
(73) Titulaire: ALSTOM Transport Technologies, 93400 Saint-Ouen (FR)
(72) Inventeur: DUPRAT, Patrick, 93340 LE RAINCY (FR)
(74) Mandataire: Lavoix

(56) Documents cités:
- WO-A1-2007/056804
- WO-A1-2017/059893
- DE-A1- 19 935 783
- FR-A1- 3 019 112
- Götting Kg ET AL: "AGV Guidance Technologies", , 28 février 2012 (2012-02-28), XP055434383, www.goetting.de Extrait de l'Internet: URL:http://www.goetting-agv.com/dateien/do wnloads/2012_02_16_automatic-guidance-of-v ehicles-presentation_E_R07_TD.pdf [extrait le 2017-12-12]

## Description

La présente invention concerne les véhicules électriques.

Une tendance générale des constructeurs de véhicules, en particulier de véhicules électriques, est de s'orienter vers la mise sur le marché de véhicules totalement autonomes ou tout au moins offrant une aide avancée à la conduite.

Par ailleurs, fort de son expérience dans le domaine des systèmes d'alimentation par le sol du type par conduction pour des véhicules électriques guidés, c'est-à-dire contraints à se déplacer le long de voies (en particulier de tramways se déplaçant le long de voies ferrées), la demanderesse à développer des systèmes d'alimentation par le sol du type par conduction pour des véhicules électriques non guidés. On pourra par exemple consulter la demande de brevet français numéro 14 52525.

Les documents WO 2017/059893 A1, DE 199 35 783 A1 et WO 2007/06804 A1 divulguent des ensembles constitués d'un système d'alimentation par le sol et d'un véhicule électrique.

La présente invention vise donc à répondre à la tendance précitée en perfectionnant à la fois les systèmes d'alimentation par le sol et les véhicules électriques propres à coopérer avec de tels systèmes.

L'invention a donc pour objet un ensemble constitué d'un système d'alimentation par le sol et d'un véhicule électrique conforme aux revendications.

L'invention sera mieux comprise à la lecture de la description qui va suivre d'un mode de réalisation particulier, donné uniquement à titre illustratif et non limitatif, et faite en se référant aux dessins annexés sur lesquels :

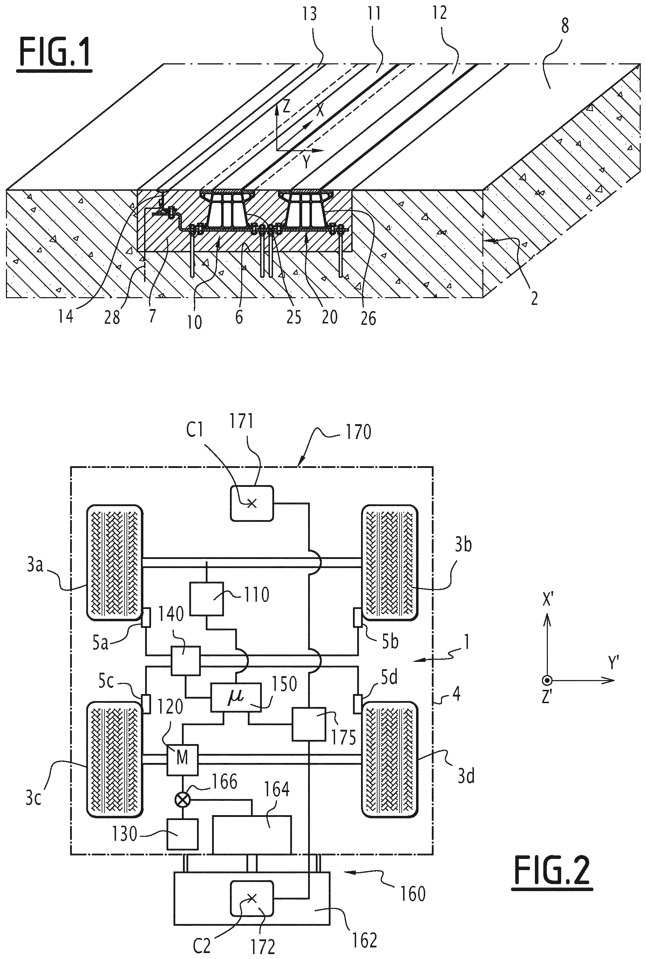

- la figure 1 est une représentation matérielle schématique en perspective d'une chaussée équipée d'un mode de réalisation préféré d'un système d'alimentation par le sol de l'équipement selon l'invention ;
- la figure 2 est une représentation schématique en vue de dessus d'un mode de réalisation préféré d'un véhicule électrique de l'équipement selon l'invention ;
- la figure 3 est une vue de derrière du véhicule de la figure 2 roulant sur la chaussé de le figure 1 ;
- la figure 4 est une vue de dessus du véhicule de la figure 2 roulant sur la chaussé de le figure 1 ; et,
- la figure 5 est une représentation électrique schématique du système d'alimentation par le sol de la figure 1.

Sur les figures, une voiture 1 est représentée en tant qu'exemple d'un véhicule électrique, en particulier un véhicule électrique non guidé, circulant sur une chaussée 2 intégrant un système d'alimentation par le sol 10. La voiture 1 est de préférence un véhicule sans conducteur, c'est-à-dire autonome, un calculateur de bord pilotant la voiture, notamment pour le guidage latéral sur l'axe de la voie. En variante, la voiture 1 est un véhicule avec conducteur, le calculateur de bord offrant une aide à la conduite, notamment pour le guidage latéral sur l'axe de la voie.

Le système d'alimentation par le sol 10 est du type par conduction, c'est-à-dire par mise en contact par deux pièces conductrices. Il comporte une pluralité de pistes conductrices situées au milieu d'une voie de circulation des véhicules sur la chaussée 2.

Le système 10 présente, affleurant à la surface 8 plane de la chaussée 2 une pluralité de pistes conductrices, notamment des pistes d'alimentation et une piste de protection. Plus précisément, le système 10 comporte :
- une piste de phase 11, destinée à être connectée électriquement soit à une source de puissance électrique, soit au potentiel de terre Vₜₑᵣᵣₑ ;
- une piste de neutre 12, destinée à être connectée électriquement à la barre négative de la source d'énergie pour assurer le retour du courant de traction ;
- une piste de protection 13, destinée à être connectée électriquement à un potentiel de terre Vₜₑᵣᵣₑ.

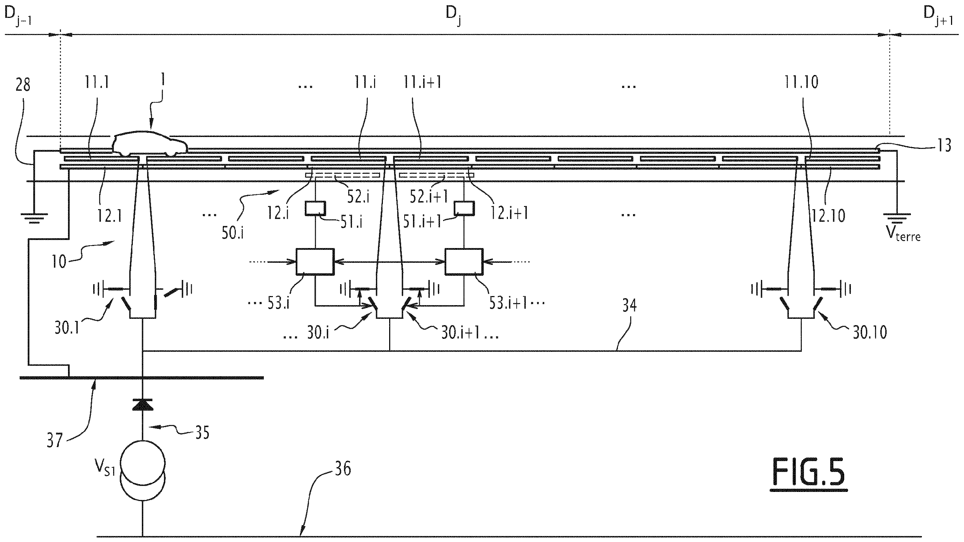

La piste de phase 11 est constituée d'une pluralité de segments 11.i (figure 5), présentant une forme allongée de préférence rectangulaire, qui, dans le mode de réalisation actuellement envisagé, présentent chacun une largeur inférieure à 10 cm et une longueur supérieure à 5 m.

Les segments sont disposés bout à bout pour constituer la piste de phase 11.

Les segments sont isolés électriquement les uns des autres.

Avantageusement, la piste de neutre 12 est réalisée en utilisant des segments du même type que ceux utilisés pour la piste de phase 11. Ainsi, la piste 12 est constituée d'une pluralité de segments 12.i (figure 5) présentant une largeur inférieure à 10 cm et une longueur supérieure à 5 m.

Les segments consécutifs de la piste de neutre 12 sont connectés les uns aux autres pour assurer le retour du courant jusqu'à la source d'énergie.

La piste de neutre 12 circule parallèlement à la piste de phase 11, sur un premier côté, par exemple le côté droit par rapport à une direction de circulation (correspondant à la direction X sur les figures), de celle-ci. Les bords latéraux de la piste de phase 11 et de la piste de neutre 12, qui sont en regard l'un de l'autre, sont espacés d'une seconde distance de 10 à 15 cm environ.

La piste de protection 13 est par exemple constituée par la face supérieure d'un profilé 14 scellé dans le béton 7 remplissant la tranchée 6.

Par exemple, le profilé 14 présente une section en forme de « I », dont l'âme centrale est disposée sensiblement verticalement. La largeur de la piste de protection 13 est par exemple d'environ 5 cm.

La piste de protection 13 est disposée parallèlement à la piste de phase 11, sur un second côté de celle-ci, opposé au premier côté sur lequel se trouve la piste de neutre 12, par exemple sur le côté gauche par rapport à la direction de circulation.

Les bords latéraux de la piste de phase 11 et de la piste de protection 13, qui sont en regard l'un de l'autre, sont espacés d'une seconde distance de 10 à 15 cm environ.

La fonction de la piste de protection 13 est de stopper d'éventuels courants de fuite provenant de la piste de phase 11, les éventuels courants de fuite vers le premier côté étant stoppés par la piste de neutre 12.

Avec ce choix particulier de valeurs pour les dimensions latérales des différentes pistes et de leur espacement mutuel, le système 10 présente une largeur totale d'environ 45 cm.

Lorsque la piste de phase 11 est portée à un potentiel élevé, toute fuite de courant, due par exemple à la présence d'une hauteur d'eau conductrice sur la chaussée 2 ou à tout autre matériau conducteur en travers du système d'alimentation par le sol 10, est collectée par la piste de neutre 12 et/ou par la piste de protection 13. La portion de la chaussée 2 portée à un potentiel élevé ne s'étend donc pas latéralement au-delà des pistes du système 10, ce qui permet de garantir qu'un piéton se trouvant à côté de ce véhicule lorsque la piste de phase 11 est portée à un potentiel élevé ne sera pas électrocuté.

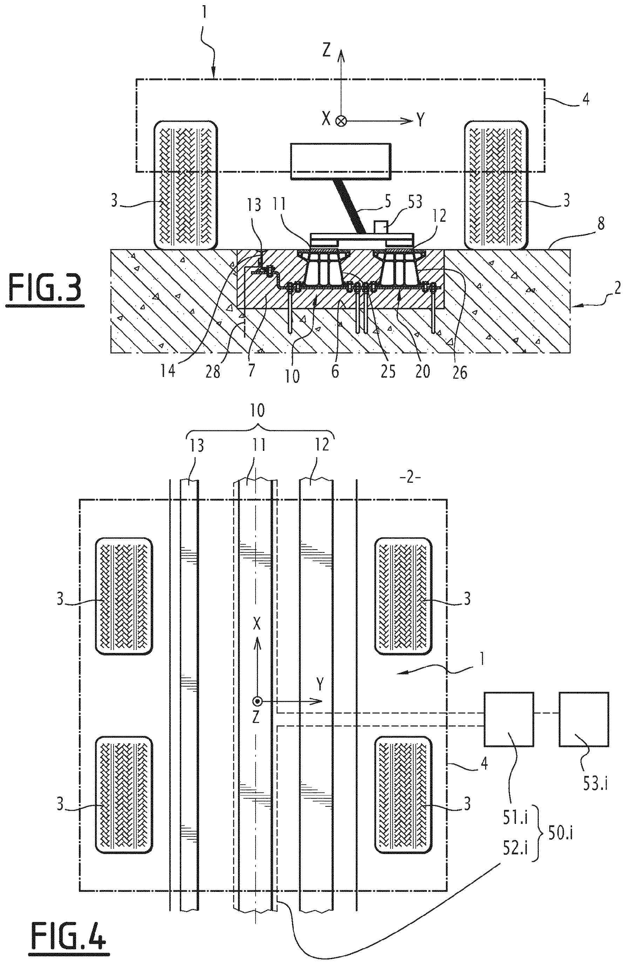

De plus, un dispositif, représenté schématiquement sur la figure 3 et portant la référence 34, est prévu pour détecter la circulation d'un courant de fuite dans la piste de neutre 12 ou la piste de protection 13 et déclencher une mise en sécurité du système.

De préférence, pour faciliter l'implantation des pistes du système 10, celui-ci comporte un ensemble de support. Il comporte, par exemple, une embase 20 portant deux profilés de support 25 et 26, identiques entre eux, et servant de support isolant aux pistes de phase 11 et de neutre 12. Ces pistes sont fixées mécaniquement sur les profilés de support, mais sont isolées électriquement de ces derniers.

L'embase 20 porte également le profilé 14. Un câble électrique 28, fixé à l'âme du profilé 14, est destiné à être enfoui dans la chaussée 2, de manière à mettre la piste de protection 13 au potentiel de terre Vₜₑᵣᵣₑ, et, par continuité électrique, l'embase 20.

L'embase 20 est munie d'une pluralité de tirants, réglables en hauteur, propres à être fichés dans le fond de la tranchée 6 de manière à prépositionner le système 10 de sorte que les pistes soient affleurantes à la surface 8 de la chaussée 2 à réaliser et que l'axe médian de la piste de phase coïncide avec l'axe longitudinal de la voie de circulation équipée du système 10.

Puis, du béton est coulé de manière à noyer l'ensemble de support. Les profilés de supports 25 et 26 ainsi que le profilé 14 sont alors scellés. Avantageusement, l'état de la surface supérieure de la couche de béton est travaillé pour présenter une adhérence adaptée aux pneumatiques des véhicules circulant sur la chaussée 2.

La paire de pistes d'alimentation, constituée de la piste de phase 11 et de la piste de neutre 12, ainsi que la piste de protection 13 sont affleurantes à la surface 8 de la chaussée 2. Plus précisément, les pistes 11 et 12 font légèrement en saillie au-dessus de la surface 8 de la chaussée 2, par exemple d'une hauteur de l'ordre de quelques millimètres, notamment égale à 2 mm. La piste 13 est au niveau de surface 8 de la chaussée 2.

Un trièdre XYZ est associé à la chaussée 2 de sorte que l'axe X coïncide avec l'axe médian de la pise de phase 11, c'est-à-dire l'axe longitudinal de la voie de circulation des véhicules sur la chaussée 2 ; que l'axe Z corresponde à une direction perpendiculaire à la surface 8 de la chaussée 2 ; et que l'axe Y soit orthogonale à l'axe X et à l'axe Z, le plan XY correspondant à la surface plane 8.

Un schéma électrique du système d'alimentation 10 est donné à la figure 5.

Le système 10 est subdivisé en sections longitudinales. La section Dj est située entre des sections adjacentes Dj-1 et Dj+1. Une section Dj correspond à une pluralité de segments 11.i de la piste de phase 11 (par exemple dix sur la figure 5).

Chaque segment de la pluralité de segments 11.i d'une section Dj est connecté électriquement, via un interrupteur commandé 30.i dédié soit à un potentiel de terre, soit à une ligne d'alimentation 34 commune aux différents segments 11.i de la section Dj considérée.

La ligne d'alimentation 34 est connectée à une source de puissance électrique 35. La source 35 est par exemple une sous-station électrique propre à convertir un courant triphasé délivré par un réseau externe 36 en un courant continu. La source 35 regroupe par exemple des fonctions de transformation et de redressement.

Le système 10 comporte, pour chacun des segments 11.i, un dispositif au sol d'émission-réception 50.i comportant un module d'émission-réception 51.i connecté à une antenne au sol 52.i.

L'antenne 52.i circule dans la chaussée 2 de manière à former une boucle dont l'extension selon l'axe X correspond à celle du segment 11.i qui lui est associé.

Par exemple et de préférence, l'antenne 52.i circule dans des canaux longitudinaux prévus dans chacun des bords latéraux du profilé 25 de support de la piste de phase 11.

Du fait de sa géométrique et de son implémentation au milieu de la voie de circulation, le diagramme d'antenne d'une antenne au sol 52.i est uniforme selon l'axe X et symétrique par rapport au plan XZ. Ainsi, la mesure du flux magnétique dans un plan parallèle au plan XY est essentiellement fonction de la position latérale selon l'axe Y.

Le dispositif au sol d'émission-réception 50.i est connecté à un calculateur au sol 53.i. Ce calculateur est en particulier connecté à l'interrupteur 30.i pour en commander l'ouverture ou la fermeture. Le calculateur au sol 53.i est également connecté par un réseau adapté aux autres calculateurs 53.j de manière à échanger des informations.

La voiture 1 comporte une caisse 4 et des roues 3.

Un trièdre X'Y'Z' est associé de manière classique à la voiture 1 : l'axe X' selon la direction longitudinale, orienté vers l'avant ; l'axe Y' selon la direction transversale, orienté de gauche à droite ; et l'axe Z' orthogonal à l'axe X' et à l'axe Y'. Lorsque la voiture 1 roule sur la chaussée 2, l'axe Z' coïncide sensiblement à l'axe Z.

Les roues avant 3a et 3b sont par exemple directrices. Elles sont couplées à un système de direction 110 permettant de modifier l'angle des roues pour diriger la voiture 1.

Les roues arrière 3c et 3d sont par exemple motrices. Elles sont couplées à un moteur électrique 120 pour la propulsion de la voiture 1.

La voiture 1 comporte une batterie 130 rechargeable propre à appliquer une puissance électrique adaptée au moteur électrique 120.

La voiture 1 comporte un système de freinage comportant des freins 5a à 5d sur chacune des roues 3 et un dispositif d'actionnement des freins 140 pour freiner la voiture 1.

La voiture 1 comporte un calculateur de bord 150 propre à piloter la voiture 1, pour le cas où la voiture 1 est sans pilote, ou propre à offrir une aide à la conduite lorsque le véhicule que le calculateur de bord équipe est pilotée. Pour cela le calculateur de bord 150 acquière une pluralité de données d'entrée, exécute des programmes d'ordinateur adaptés, utilisant ces données d'entrée pour générer en sortie des commandes appliquées au système de direction, au système de freinage, au moteur, à la batterie, etc. pour piloter la voiture 1.

La voiture 1 est équipée d'un dispositif de captation 160 permettant de collecter une puissance électrique depuis le système d'alimentation au sol 10, au cours du déplacement de la voiture 1.

Il comporte un patin 162 propre, dans un mode de réalisation simple, à être déplacé selon l'axe Z' par rapport à la caisse 4 de la voiture 1 pour être descendu et maintenu en contact glissant sur les pistes d'alimentation du système 10. Le dispositif de captation 160 comporte un actionneur 164 pour le déplacement du patin 162.

Le dispositif de captation 160 est couplé à la batterie 130 et au moteur 120 par des moyens d'adaptation 166 adaptés, pour appliquer la puissance électrique collectée à la batterie et/ou au moteur électrique.

Dans le mode de réalisation des figures, le patin est placé à l'arrière de la voiture 1.

La voiture 1 comporte un dispositif embarqué d'émission-réception 170 comportant un module d'émission-réception 175 connecté, de préférence, à deux antennes embarquées 171 et 172.

Les antennes sont destinées à capter un signal électromagnétique de positionnement émis par l'antenne au sol 52.i ou à transmettre un signal électromagnétique de présence vers l'antenne au sol 52.i, lorsque la voiture 1 est à l'aplomb du segment 11.i.

Les deux antennes embarquées, 171 et 172, sont montées sur la voiture 1 de manière à être distantes l'une de l'autre au moins longitudinalement, c'est-à-dire selon l'axe X'. De préférence, l'une des antennes, est portée par le patin 162 du dispositif de captation 160. Il s'agit donc de l'antenne arrière 172 pour le mode de réalisation représenté sur les figures. Une antenne embarquée placée sur le patin a pour avantage d'augmenter la sensibilité de détection du signal de positionnement émis par le sol et vice-versa, la distance entre ces deux antennes étant faibles.

Les antennes embarquées, avant 171 et arrière 172, sont propres à permettre une détermination précise de la position relative de leur centre, C1 et C2 respectivement, par rapport à l'axe X de l'antenne au sol 52.i. Par exemple, une antenne embarquée est constituée de plusieurs spires. Elle est de préférence montée sur la voiture 1 de manière à ce que son centre géométrique soit disposé sur l'axe X'.

A partir de l'analyse des flux magnétiques instantanés à travers chaque antenne, le module d'émission-réception 175 est propre à déterminer, à chaque instant et avec une grande précision, la position latérale du centre de l'antenne embarquée par rapport à l'axe X de l'antenne au sol, et par conséquent la position du véhicule par rapport à l'axe X de la chaussée.

Le module d'émission-réception 175 est connecté au calculateur de bord 150 et lui transmet ces positions relatives des centres des antennes embarquées en tant que données d'entrée pour le pilotage de la voiture 1, notamment le guidage latéral de la voiture 1.

En communication du sol vers le bord, le dispositif au sol d'émission-réception 50.i fonctionne en émission et le dispositif embarqué d'émission-réception 170 fonctionne en réception.

Plus précisément, le dispositif au sol 50.i émet un signal de positionnement, qui est un signal radio continu ayant par exemple une fréquence caractéristique de 38 kHz.

Le signal collecté par chacune des antennes embarquées, avant 171 et arrière 172, est appliqué en entrée du module embarqué d'émission-réception 175. Ce dernier détermine la position latérale instantanée du centre C1 et C2 de chaque antenne embarquée 171 et 172 par rapport à l'axe X. Le module 175 transmet ces positions latérales instantanées au calculateur de bord 150 de manière à ce qu'il détermine, compte tenu de l'écart entre les deux antennes embarquées, la position de l'axe X' du véhicule par rapport à l'axe X de la route. Le calculateur de bord 150 est en particulier propre à commander les moyens de direction 110 de manière à faire coïncider à chaque instant l'axe X' et l'axe X, c'est-à-dire qu'à chaque instant le centre géométrique de chaque antenne se situe au-dessus de l'axe X.

En communication du bord vers le sol, le dispositif embarqué d'émission-réception 170 fonctionne en émission et le dispositif au sol d'émission-réception 50.i fonctionne en réception.

Plus précisément, le module embarqué d'émission-réception 175 est propre à appliquer, à au moins l'une des deux antennes embarquées 171 ou 172, un signal de présence de manière à ce que cette antenne embarquée émette un signal radio continu ayant par exemple une fréquence caractéristique de 483 kHz.

De préférence, l'antenne embarquée choisie pour émettre le signal de présence est l'antenne arrière 172.

Le signal collecté par l'antenne au sol 52.i est appliqué en entrée du module au sol d'émission-réception 51.i. Lorsqu'un signal de présence est effectivement capté par le dispositif au sol d'émission-réception 50.i, le module 51.i transmet au calculateur 53.i un message indiquant la présence d'un véhicule à l'aplomb du segment 11.i correspondant. Lors de la détection de la voiture 1, le calculateur 53.i commande en fermeture l'interrupteur 30.i de sorte que le segment 11.i de la piste de phase 11 soit porté au potentiel d'alimentation Vₛ. Le patin de la voiture 1 peut alors capter une puissance électrique depuis le système 10.

Lorsqu'aucun signal de présence n'est capté par le dispositif au sol d'émission-réception 50.i, le module 51.i ne transmet aucun message au calculateur 53.i, qui maintien en ouverture l'interrupteur 30.i de sorte que le segment 11.i de la piste de phase 11 soit porté au potentiel 0 V.

De nombreuses variantes sont envisageables par l'homme du métier.

Ainsi, dans le mode de réalisation présenté en détail ci-dessus, les dispositifs embarqués et au sol fonctionnent à la fois en réception et en émission pour réaliser à la fois la fonction de positionnement du véhicule sur la chaussée et la fonction de détection de la présence d'un véhicule pour porter le segment au-dessus duquel se situe le véhicule au potentiel d'alimentation.

En variante, l'antenne au sol 52.i circule dans des canaux longitudinaux prévus dans chacun des bords latéraux du profilé 26 de support de la piste de neutre 12 ou autour d'une portion de la piste de protection 13, ou encore librement sur le premier côté entre la piste de phase 11 et la piste de neutre ou le second côté entre la piste de phase 11 et la piste de protection 13. Le décalage latéral entre l'axe de l'antenne et l'axe de la chaussée doit alors être connu du calculateur de bord pour déterminer la position latérale du véhicule par rapport à l'axe de la chaussée.

En variante, le dispositif embarqué ne comporte qu'une seule antenne pour la fonction de positionnement latéral. Cependant, avec une seule position latérale on perd la redondance et le surplus de précision de localisation, qu'apporte la seconde antenne. C'est l'avantage d'utiliser deux antennes embarquées séparées longitudinalement.

En variante, le patin est mobile par rapport à la caisse du véhicule non seulement verticalement mais également horizontalement. Ainsi, si une antenne embarquée est montée sur le patin, le calculateur de bord doit corriger la mesure de la position latérale du centre de cette antenne embarquée avec la position instantanée du patin par rapport à la caisse du véhicule, avant de déterminer la position latérale du véhicule par rapport à l'axe de la voie sur laquelle circule le véhicule.

## Revendications

1. Ensemble constitué d'un système d'alimentation par le sol (10) et d'un véhicule électrique (1), le système d'alimentation par le sol (10) étant du type par conduction et comportant des pistes conductrices (11, 12, 13) disposées sur une chaussée (2) et le véhicule électrique (1) étant propre à capter une énergie électrique depuis lesdites pistes conductrices alors que ledit véhicule électrique (1) se déplace sur la chaussée (2), le système d'alimentation par le sol (10) comportant un dispositif au sol (50.i) comportant une antenne au sol (52.i) enfouie dans la chaussée (2), conformée de manière à présenter un diagramme de rayonnement sensiblement constant selon un axe longitudinal (X) de la chaussée (2) et propre à émettre un signal de positionnement, le véhicule électrique (1) comportant un dispositif embarqué (170) comportant une antenne embarquée (171, 172) et un module embarqué d'émission-réception (175), qui est connecté à l'antenne embarquée et est propre à déterminer une position latérale d'un centre (C1, C2) de l'antenne embarquée par rapport à l'axe longitudinal (X) de la chaussée (2) à partir du signal de positionnement capté par l'antenne embarquée, le module embarqué d'émission-réception (175) étant connecté à un calculateur de bord (150) du véhicule électrique et transmettant ladite position latérale audit calculateur de bord (150), ledit calculateur de bord utilisant ladite position latérale en tant que donnée d'entrée pour piloter le véhicule électrique (1),
**caractérisé en ce que** le système embarqué (170) est un dispositif embarqué d'émission d'un signal de présence et le système d'alimentation par le sol (10) comporte un dispositif au sol de réception du signal de présence, **en ce que** le dispositif embarqué est un dispositif d'émission-réception (170) propre à participer à la fois à une fonction de positionnement latéral par la réception du signal de positionnement émis depuis le sol, et à une fonction de détection de présence d'un véhicule par l'émission du signal de présence vers le sol, et **en ce que** le dispositif au sol est un dispositif d'émission-réception (50.i) propre à participer à la fois à la fonction de positionnement latéral par l'émission du signal de positionnement à destination du bord du véhicule et à la fonction de détection de présence par la détection du signal de présence adapté émis par le bord du véhicule l'antenne embarquée (171, 172) étant propre à capter le signal de positionnement émis par l'antenne au sol (52.i) pour la fonction de positionnement latéral et à transmettre le signal de présence vers l'antenne au sol (52.i) pour la fonction de détection de présence d'un véhicule, lorsque le véhicule électrique (1) est à l'aplomb des pistes conductrices.

2. Ensemble selon la revendication 1, dans lequel le système d'alimentation par le sol (10) comporte :
- une paire de pistes d'alimentation comportant une piste conductrice dite de phase (11), propre à être portée à une tension d'alimentation (Vₛ), et une piste conductrice dite de neutre (12), pour le retour du courant, la piste de neutre circulant parallèlement à la piste de phase et la piste de phase étant constituée d'une pluralité de segments (11.i) disposés bout à bout selon l'axe longitudinal (X) de la chaussée (2), chaque segment étant isolé électriquement de ses voisins : et,
- une source de tension (35) propre à délivrer la tension d'alimentation.

3. Ensemble selon la revendication 1 ou la revendication 2, dans lequel le véhicule électrique (1) comporte un dispositif de captation de courant (160) comportant un patin (162) propre à venir en contact glissant sur les pistes conductrices du système d'alimentation par le sol (10).

4. Ensemble selon la revendication 3, dans lequel l'antenne embarquée (172) du dispositif embarqué (170) est montée sur le patin (162).

5. Ensemble selon l'une quelconque des revendications 1 à 4, dans lequel le dispositif embarqué (170) comporte une antenne embarquée avant (171), montée à l'avant du véhicule électrique (1), et une antenne embarquée arrière (172), montée à l'arrière du véhicule électrique (1), le module embarqué (175) étant propre à déterminer la position latérale du centre géométrique de chacune des antennes embarquées avant et arrière par rapport à l'axe longitudinal (X) de la chaussée et à transmettre lesdites positions latérales au calculateur de bord (150) pour déterminer la position de l'axe longitudinal (X') du véhicule électrique (1) par rapport à l'axe longitudinal (X) de la chaussée.

6. Ensemble selon l'une quelconque des revendications 1 à 5, dans lequel le signal de positionnement est un signal radio continu.

7. Ensemble selon l'une quelconque des revendications 1 à 6, dans lequel le véhicule électrique est du type sans conducteur, un calculateur de bord pilotant le véhicule électrique, ou du type avec conducteur, un calculateur de bord offrant une aide à la conduite du véhicule électrique.

## Patentansprüche

1. Anordnung, gebildet aus einem System (10) der Versorgung über den Boden und einem elektrischen Fahrzeug (1), wobei das System (10) der Versorgung über den Boden ein solches durch Leitung ist und leitende Bahnen (11, 12, 13) aufweist, die an einer Fahrbahn (2) angeordnet ist, und das elektrische Fahrzeug (1) geeignet ist, eine elektrische Energie von den leitenden Bahnen abzunehmen, wenn das elektrische Fahrzeug (1) sich über die Fahrbahn (2) bewegt, wobei das System (10) der Versorgung über den Boden eine Bodenvorrichtung (50.i) aufweist, die eine in der Fahrbahn vergrabene Bodenantenne (52.i) aufweist, die derart ausgebildet ist, dass sie ein gemäß einer Längsachse (X) der Fahrbahn (2) im Wesentlichen konstantes Strahlungsdiagramm darstellt und geeignet ist, ein Positioniersignal zu senden, wobei das elektrische Fahrzeug (1) eine mitgeführte Vorrichtung (170) aufweist, die eine mitgeführte Antenne (171, 172) und ein Sende-Empfangsmodul (175) aufweist, das an die mitgeführte Antenne angeschlossen ist und geeignet ist, eine seitliche Position einer Mitte (C1, C2) der mitgeführten Antenne in Bezug auf die Längsachse (X) der Fahrbahn (2) aus dem von der mitgeführten Antenne aufgenommen Positioniersignal zu bestimmen, wobei das mitgeführte Sende-Empfangsmodul (175) mit einem Bordrechner (150) des elektrischen Fahrzeugs verbunden ist und die seitliche Position an den Bordrechner (150) sendet, wobei der Bordrechner die seitliche Position als Eingangsdaten zum Steuern des elektrischen Fahrzeugs (1) verwendet,
**dadurch gekennzeichnet, dass** das mitgeführte System (170) eine mitgeführte Vorrichtung zum Senden eines Präsenzsignals ist und das System (10) der Versorgung über den Boden eine Bodenempfangsvorrichtung für das Präsenzsignal aufweist, dass die mitgeführte Vorrichtung eine Sende-Empfangsvorrichtung (170) ist, die geeignet ist, sich sowohl an einer Funktion der seitlichen Positionierung durch den Empfang des vom Boden gesendeten Positioniersignals als auch an einer Funktion der Detektion des Vorhandenseins eines Fahrzeugs durch Senden des Präsenzsignals zu dem Boden zu beteiligen und dass die Bodenvorrichtung eine Sende-Empfangsvorrichtung (50.i) ist, die geeignet ist, sich sowohl an der Funktion der seitlichen Positionierung durch Senden des Positioniersignals zu dem Fahrzeug als auch an der Funktion der Detektion des Vorhandenseins durch die Detektion des angepassten Präsenzsignals, das von Bord des Fahrzeugs gesendet wird, zu beteiligen, wobei die mitgeführte Antenne (171, 172) geeignet ist, das von der Bodenantenne (52.i) gesendete Positioniersignal für die Funktion der seitlichen Positionierung zu empfangen und das Präsenzsignal an die Bodenantenne (52.i) für die Funktion des Detektierens des Vorhandenseins eines Fahrzeuges zu senden, wenn das elektrische Fahrzeug (1) im Lot über den leitenden Bahnen ist.

2. Anordnung nach Anspruch 1, bei der das System (10) der Versorgung über den Boden aufweist:
- ein Paar von Versorgungsbahnen, das eine leitende Bahn, genannt Phasenleiter (11), der geeignet ist, auf eine Versorgungsspannung (Vs) gebracht zu werden, und eine leitende Bahn, genannt Neutralleiter (12), für das Zurückleiten des Stroms aufweist, wobei der Neutralleiter parallel zum Phasenleiter verläuft und der Phasenleiter aus einer Mehrzahl von Segmenten (11.i) gebildet ist, die aneinanderstoßend gemäß der Längsachse (X) der Fahrspur (2) angeordnet sind, wobei jedes Segment elektrisch zu seinen benachbarten Segmenten isoliert ist: und
- eine Spannungsquelle (35), die geeignet ist, die Versorgungsspannung zu liefern.

3. Anordnung nach Anspruch 1 oder Anspruch 2, bei der das elektrische Fahrzeug (1) eine Vorrichtung (160) zur Stromabnahme aufweist, die eine Stromabnehmerkufe aufweist, die geeignet ist, in gleitenden Kontakt auf den leitenden Bahnen des Systems (10) der Versorgung über den Boden zu kommen.

4. Anordnung nach Anspruch 3, bei der die mitgeführte Antenne (172) der mitgeführten Vorrichtung (170) an der Stromabnehmerkufe (162) montiert ist.

5. Anordnung nach einem beliebigen der Ansprüche 1 bis 4, bei der die mitgeführte Vorrichtung (170) eine vordere mitgeführte Antenne (171), die vorn am elektrischen Fahrzeug (1) angebracht ist, und eine hintere mitgeführte Antenne (172), die hinten am elektrischen Fahrzeug (1) angebracht ist, aufweist, wobei das mitgeführte Modul (175) geeignet ist, die seitliche Position der geometrischen Mitte jeder der vorderen und hinteren mitgeführten Antenne in Bezug auf die Längsachse (X) der Fahrbahn zu bestimmen und die seitliche Position an den Bordrechner (150) zu übertragen, um die Position der Längsachse (X') des elektrischen Fahrzeugs (1) in Bezug auf die Längsachse (X) der Fahrbahn zu bestimmen.

6. Anordnung nach einem beliebigen der Ansprüche 1 bis 5, bei der das Positioniersignal ein kontinuierliches Funksignal ist.

7. Anordnung nach einem beliebigen der Ansprüche 1 bis 6, bei der das elektrische Fahrzeug ein solches ohne Fahrer ist, wobei der Bordrechner das elektrische Fahrzeug steuert, oder ein solches mit Fahrer ist, wobei ein Bordrechner eine Hilfe zum Führen des elektrischen Fahrzeugs bietet.

## Claims

1. An assembly made up of a ground level power supply system (10) and an electric vehicle (1), the ground level power supply system (10) being of the type using conduction and including conductive tracks (11, 12, 13) arranged in a roadway (2) and the electric vehicle (1) being capable of capturing electric energy from said conductive tracks while said electric vehicle (1) is moving on the roadway (2), the ground level power supply system (10) including a ground level device (50.i) including a ground level antenna (52.i) buried in the roadway (2), configured so as to have a substantially constant radiation chart along a longitudinal axis (X) of the roadway (2) and capable of emitting a positioning signal, the electric vehicle (1) including an on board device (170) including an on board antenna (171, 172) and an on board transceiver module (175), which is connected to the on board antenna and is capable of determining a lateral position of a center (C1, C2) of the on board antenna relative to the longitudinal axis (X) of the roadway (2) from the positioning signal captured by the on board antenna, the on board transceiver module (175) being connected to an onboard computer (150) of the electric vehicle and sending said lateral position to said onboard computer (150), said on board computer using said lateral position as input data to drive the electric vehicle (1),
**characterized in that** the on board device (170) is an on board device for emitting a presence signal and the ground level power supply system (10) includes a ground level device for receiving the presence signal, **in that** the on board device is a transceiver device (170) capable of participating both in a lateral positioning function by receiving the positioning signal emitted from the ground, and a function for detecting the presence of a vehicle by emitting the presence signal toward the ground, and **in that** the ground level device is a transceiver device (50.i) capable of participating both in the lateral positioning function by emitting the positioning signal intended for on board the electric vehicle, and the presence detection function by detecting the suitable presence signal emitted from on board the electric vehicle. The on board antenna (171, 172) being capable of receiving the positioning signal emitted by the ground level antenna (52.i) for the lateral positioning function and transmitting the presence signal to the ground level antenna (52.i) for the vehicle presence detection function, when the electic vehicle 1) is situated above the conductive tracks.

2. The assembly according to claim 1, wherein the ground level power supply system (10) includes:
- a pair of power supply tracks including a so-called phase conductive track (11), able to be brought to a supply voltage (Vₛ), and a so-called neutral conductive track (12), for the reverse current, the neutral track traveling parallel to the phase track and the phase track being made up of a plurality of segments (11.i) arranged end-to-end along the longitudinal axis (X) of the roadway (2), each segment being electrically insulated from its neighbors; and
- a voltage source (35) capable of delivering the supply voltage.

3. The assembly according to claim 1 or claim 2, wherein the electric vehicle (1) includes a current capture device (160) including a shoe (162) capable of coming into sliding contact on the conductive tracks of the ground level power supply system (10).

4. The assembly according to claim 3, wherein the on board antenna (172) of the on board device (170) is mounted on the shoe (162).

5. The assembly according to any one of claims 1 to 4, wherein the on board device (170) includes a front on board antenna (171), mounted at the front of the electric vehicle (1), and a rear on board antenna (172), mounted at the rear of the electric vehicle (1), the on board module (175) being capable of determining the lateral position of the geometric center of each of the front and rear on board antennas relative to the longitudinal axis (X) of the roadway and sending said lateral positions to the on board computer (150) to determine the position of the longitudinal axis (X') of the electric vehicle (1) relative to the longitudinal axis (X) of the roadway.

6. The assembly according to any one of claims 1 to 5, wherein the positioning signal is a continuous radio signal.

7. The assembly according to any one of claims 1 to 6, wherein the electric vehicle is of the driverless type, an on board computer steering the electric vehicle, or of the type with a driver, an on board computer offering driving assistance for the electric vehicle.
